# EUROPEAN PATENT APPLICATION

(11) **EP 2 690 742 A1**
(43) Date of publication of application: **29.01.2014**
(21) Application number: 12760720.8
(22) Date of filing: 22.03.2012
(51) Int. Cl.: H02J 7/00, H01M 10/46, H02J 17/00

(54) **IN-VEHICLE CHARGER**

(30) Priority: 22.03.2011 JP 2011061965
(71) Applicant: Panasonic Corporation, Osaka 571-8501 (JP)
(72) Inventor: MORIGUCHI, Wataru, Osaka-shi, Osaka 540-6207 (JP)
(74) Representative: Vigand, Philippe
(86) International application number: PCT/JP2012/001989
(87) International publication number: WO 2012/127868

(57) **Abstract**

An in-vehicle charger includes a case (7) whose one face having an opening, a lid (8) that covers the opening (6) of the case (7) in an openable and closable manner, a charging coil (9) that is provided in an inner portion of the case (7) facing the lid (8), and an urging portion (11) that is provided on an inner surface side of the lid (8) and urges a mobile device (10) disposed in the case (7) toward the charging coil (9). The urging portion (11) is provided with a plurality of vent holes (11a). Therefore, the portable device (10) can be efficiently charged at any time even during the time when the vehicle is running.

## Description

### Technical Field

The present invention relates to an in-vehicle charger to be mounted to a vehicle.

### Background Art

With the widespread use of mobile devices, an in-vehicle charger has been suggested which is capable of charging the mobile devices also in the vehicle. For this purpose, there is a need for a so-called non-contact in-vehicle charger in which charging is performed just by placing the mobile device on the in-vehicle charger so that a vehicle driving is not hindered by the action to charge the mobile device.

The non-contact charger disclosed in Patent Document 1 includes a case whose one face has an opening, a lid which covers the opening of the case in an openable/closable manner and a charging coil which is disposed inside a bottom surface of the case facing the lid. When the mobile device is charged using the non-contact charger, power is supplied by magnetic flux in such a way that the mobile device is accommodated in the case and the charging coil of the non-contact charger and a charging coil of the mobile device are placed to face each other.

### Related Art Documents

Patent Document

Patent Document 1: JP-A-4-317527

### Summary of the Invention

### Problems to be Solved by the Invention

While a vehicle mounted with the non-contact charger described above is running, there is a possibility that a mobile device cannot be effectively charged using the non-contact charger. That is, when the mobile device is charged using the non-contact charger, the charging coil of the mobile device and the charging coil of the non-contact charger are just opposed to each other in the case and the mobile device is not engaged with the non-contact charger. Accordingly, there is a possibility that these two charging coils are not opposed to each other due to oscillation or impact occurred during running of the vehicle. When these two charging coils are not opposed to each other, efficient charging cannot be carried out.

An object of the present invention is to provide an in-vehicle charger which is capable of performing an efficient charging at all times even during running of a vehicle.

### Means for Solving the Problems

The invention provides an in-vehicle charger comprising: a case whose one face having an opening; a lid that covers the opening of the case in an openable and closable manner; a charging coil that is provided in an inner portion of the case facing the lid; and an urging portion that is provided on an inner surface side of the lid and urges a mobile device disposed in the case toward the charging coil.

### Advantageous Effects of the Invention

According to the in-vehicle charger of the present invention, it is possible to perform an efficient charging at all times even during running of a vehicle.

Specifically, since the urging portion for urging the mobile device disposed in the case toward the charging coil is provided at the inner surface side of the lid in the present invention, it is possible to suppress positional deviation of the mobile device in the case due to oscillation or impact occurred during running of a vehicle mounted with the in-vehicle charger according to the present invention. As a result, it is possible to perform an efficient charging at all times even during running of a vehicle.

Further, since the urging portion is provided with a plurality of vent holes, it is possible to suppress the temperature rise due to the charging of the mobile device.

### Brief Description of the Drawings

Fig. 1 is a perspective view showing an in-vehicle charger according to an illustrative embodiment of the present invention in the state of being mounted to a vehicle.
Fig. 2 is a sectional view showing the in-vehicle charger according to the illustrative embodiment.
Fig. 3 is a sectional view showing the in-vehicle charger according to the illustrative embodiment.
Fig. 4 is a block diagram showing an internal electrical configuration of the in-vehicle charger according to the illustrative embodiment.
Fig. 5 is a block diagram showing an internal electrical configuration of a mobile device which is charged from the in-vehicle charger according to the illustrative embodiment in a non-contact charging manner.
Fig. 6 is a sectional view showing an in-vehicle charger according to another illustrative embodiment.
Fig. 7 is a sectional view showing the in-vehicle charger according to another illustrative embodiment.

### Mode for Carrying out the Invention

Hereinafter, an illustrative embodiment of the present invention will be described with reference to the drawings.

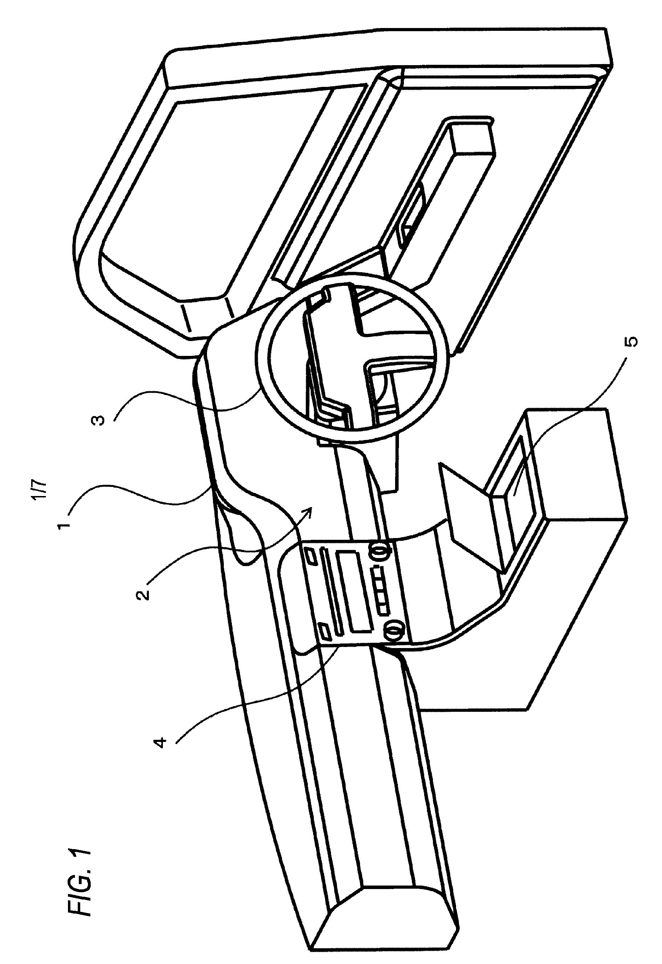

Fig. 1 is a perspective view showing an in-vehicle charger according to an illustrative embodiment in the state of being mounted to a vehicle. As shown in Fig. 1, a steering wheel 3 is arranged in front of a vehicle interior 2 of a vehicle body 1 and an in-vehicle electronic device 4 is mounted to the front left side of the steering wheel 3. Further, an in-vehicle charger 5 is arranged at a left side of the steering wheel 3 and in front of the in-vehicle electronic device 4 in the vehicle interior 2.

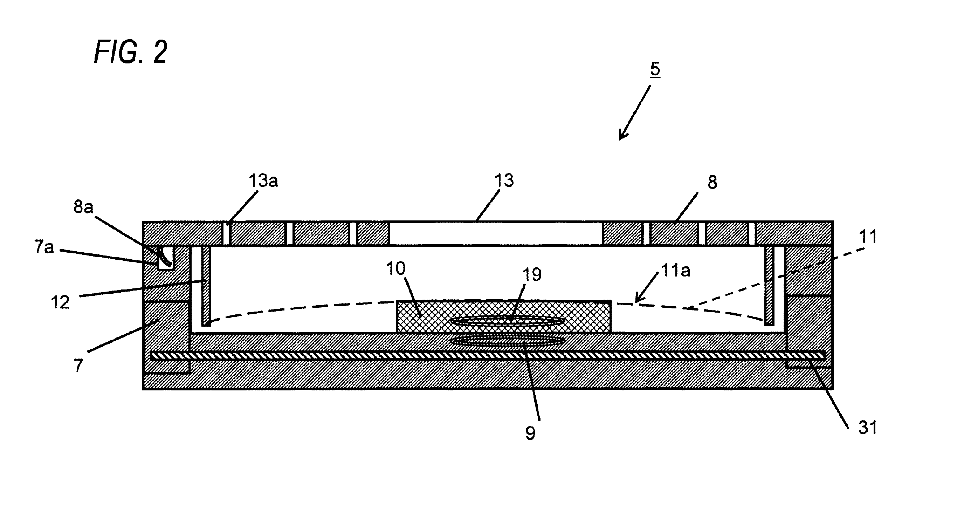

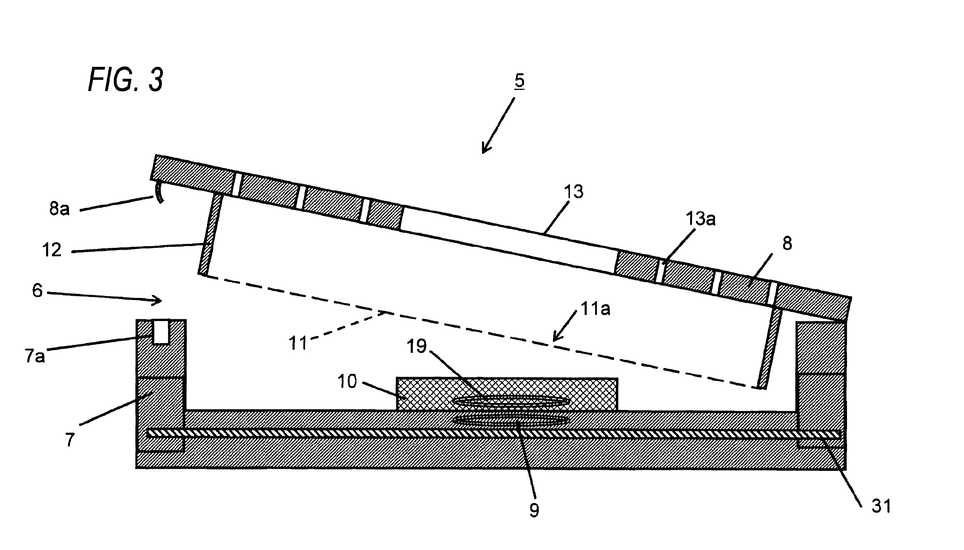

Fig. 2 and Fig. 3 are sectional views showing the in-vehicle charger 5 according to the illustrative embodiment. As shown in Fig. 2 or Fig. 3, the in-vehicle charger 5 includes a box-shaped case 7 whose upper face is an opening 6, a lid 8 which covers the opening 6 of the case 7 in an openable/closable manner and a charging coil 9 which is provided in a bottom portion of the case 7 facing the lid 8. Here, one charging coil 9 is provided substantially at the center of the bottom portion of the case 7.

In the present embodiment, a frame 12 is provided on an inner surface side of the lid 8 and protrudes into the case 7 from a lower surface of the lid 8 when the opening 6 of the case 7 is covered with the lid 8. Further, an urging portion 11 formed by an elastic net is fixed to an end of the frame 12. As shown in Fig. 3, the urging portion 11 is attached substantially parallel to an inner surface of the lid 8. Accordingly, as shown in Fig. 2, a mobile device 10 such as a mobile phone is placed on a bottom surface of the case 7 to configure an inner space and the urging portion 11 urges the mobile device 10 toward the charging coil 9 when the opening 6 of the case 7 is covered with the lid 8. Here, a charging coil 19 is provided inside the mobile device 10.

Since the urging portion 11 is formed by the elastic net, portions between the meshes constitute a plurality of vent holes 11a in a state where the urging portion 11 is fixed to the frame 12. A viewing window 13 is provided at a portion of the lid 8 facing the charging coil 9. Further, vent holes 13a are provided at an outer peripheral portion of the viewing window 13.

Further, an engaging portion 8a is provided at at least one place outside the frame 12 in an inner surface side of the lid 8. In addition, an engaging portion 7a is provided at a place of the case 7 corresponding to the engaging portion 8a when the opening 6 of the case 7 is covered with the lid 8. Accordingly, as the lid 8 is lowered toward the case 7, the engaging portion 8a of the lid 8 and the engaging portion 7a of the case 7 are engaged with each other. At this time, the lid 8 is fixed in a state of covering the opening 6 of the case 7.

Furthermore, a shield portion 31 is provided below the charging coil 9 in the bottom surface portion of the case 7. The shield portion 31 is provided for preventing magnetic flux generated in the charging coil 9 from being leaked downward from the case 7.

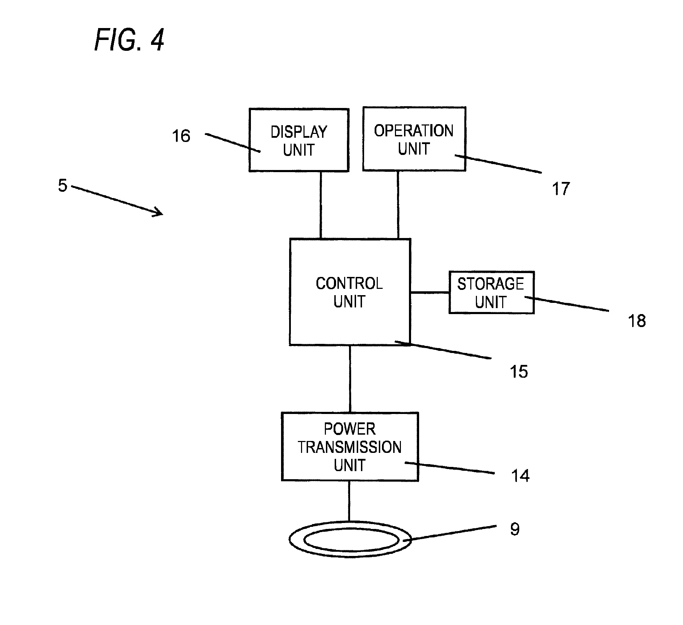

Fig. 4 is a block diagram showing an internal electrical configuration of the in-vehicle charger 5. As shown in Fig. 4, the in-vehicle charger 5 includes the charging coil 9, a power transmission unit 14, a control unit 15, a display unit 16, an operation unit 17 and a storage unit 18. The charging coil 9 is connected to the control unit 15 via the power transmission unit 14. Further, the control unit 15 is connected to the display unit 16 to display a charging state, the operation unit 17 to instruct charging and the storage unit 18 to store an operating program.

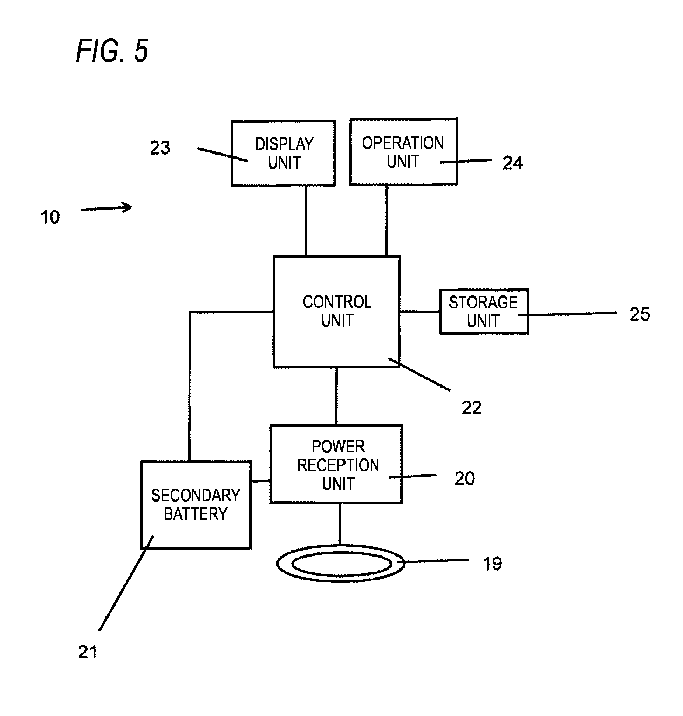

Fig. 5 is a block diagram showing an internal electrical configuration of the mobile device 10 which is charged from the in-vehicle charger 5 in a non-contact charging manner. As shown in Fig. 5, the mobile device 10 includes the charging coil 19, a power reception unit 20, a secondary battery 21, a control unit 22, a display unit 23, an operation unit 24 and a storage unit 25. The secondary battery 21 is connected to the charging coil 19 via the power reception unit 20. The control unit 22 performs a charging control. The control unit 22 is connected to the display unit 23 to display a charging state, etc., the operation unit 24 to operate the mobile device 10 and the storage unit 25 to store an operating program.

Hereinafter, the change of state when charging the mobile device 10 using the in-vehicle charger 5 of the present embodiment will be described.

First, as shown in Fig.1 and Fig. 3, a user opens the lid 8 of the in-vehicle charger 5 and places the mobile device 10 on a bottom surface of the case 7 to configure an inner space. At this time, the user places the mobile device 10 in such a way that the charging coil 19 of the mobile device 10 is opposed to the charging coil 9 of the in-vehicle charger 5.

Next, the engaging portion 8a of the lid 8 and the engaging portion 7a of the case 7 are engaged with each other when the lid 8 is closed by the user. When the lid 8 is closed and the opening 6 of the case 7 is covered with the lid 8, a central portion of the urging portion 11 provided on an inner surface of the lid 8 abuts against an upper surface of the mobile device 11 and the urging portion is elastically deformed in the shape of a dome, as shown in Fig. 2. As the urging portion 11 is elastically deformed in the shape of a dome, the mobile device10 is urged toward the charging coil 9 of the in-vehicle charger 5.

As described above, according to the present embodiment, when the lid 8 is closed in a state where the mobile device 10 which can be charged in a non-contact charging manner is placed in the case 7 of the in-vehicle charger 5 so that both charging coils 9, 19 are opposed to each other, the mobile device 10 is urged by the urging portion 11 provided on an inner surface side of the lid 8. By doing so, it is possible to suppress positional deviation of the mobile device 10 in the case 7 due to oscillation or impact occurred during running of a vehicle mounted with the in-vehicle charger 5. As a result, it is possible to perform an efficient charging at all times even during running of a vehicle.

Further, as described above, the urging portion 11 is provided with a plurality of vent holes 11a. Accordingly, it is possible to suppress the temperature rise due to the charging of the mobile device 10.

Further, the lid 8 is also provided with vent holes 13a. From this point too, it is possible to suppress the temperature rise due to the charging of the mobile device 10.

Furthermore, the viewing window 13 is provided at a portion of the lid 8 facing the charging coil 9. Accordingly, it is possible for a user to visually confirm the state of the mobile device 10 even during charging.

In the present embodiment, a member similar to the shield portion 31 is not provided in the lid 8. When the shied portion is provided in the lid 8, it is difficult to receive a call during charging of the mobile device 10. Accordingly, the shied portion is not provided above a place in which the mobile device 10 is arranged. In this regard, since the charging coil 19 or the mobile device 10 is present above the charging coil 9 of the in-vehicle charger 5, leakage of magnetic flux toward the upper side becomes very small.

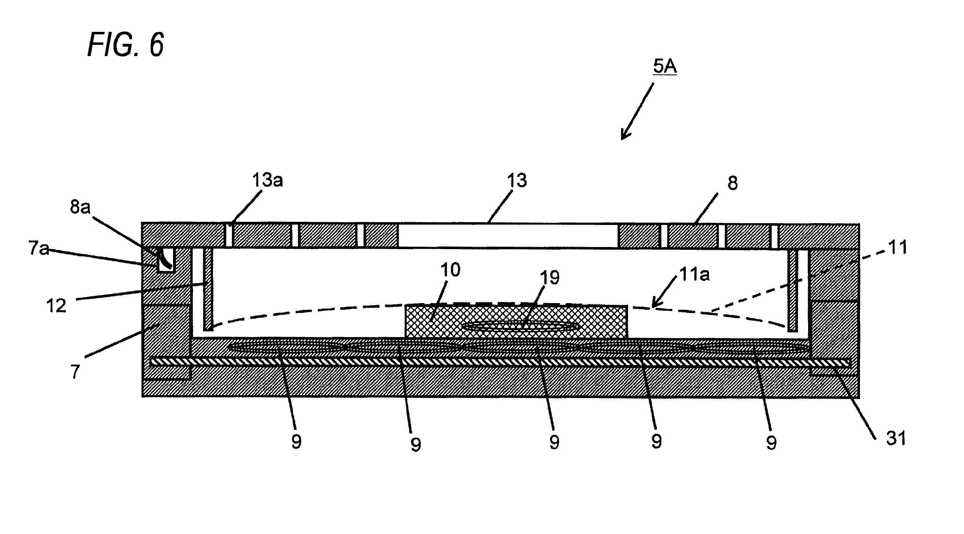

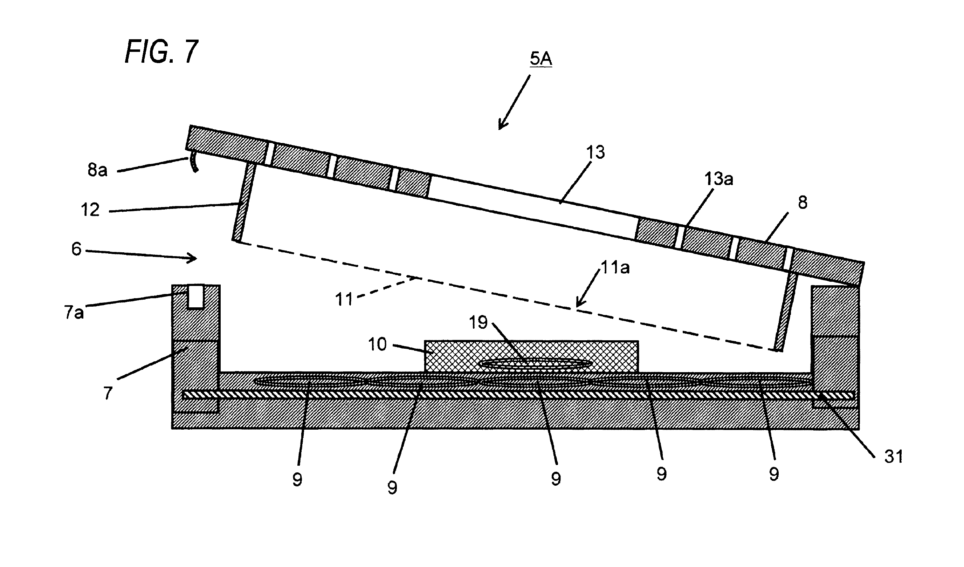

Fig. 6 and Fig. 7 are sectional views showing an in-vehicle charger 5A according to another embodiment. In the in-vehicle charger 5 described above, one charging coil 9 is provided substantially at the center of the bottom portion of the case 7. However, the number of the charging coil 9 disposed at the bottom portion of the case 7 is not limited to one, but may be plural, as shown in Fig. 6 and Fig. 7. In a case where a plurality of charging coils 9 is disposed, any one of the charging coils 9 is opposed to the charging coil 19 of the mobile device 10 even when a user puts the mobile device 10 at any position on the bottom surface of the case 7 to configure the inner space. Accordingly, it is convenient for a user to use the in-vehicle charger.

Although the present invention has been described in detail with reference to particular illustrative embodiments, the present invention is not limited to the illustrative embodiments and it is obvious to those skilled in the art that the illustrative embodiments can be variously modified without departing a spirit and a scope of the present invention.

This application is based upon Japanese Patent Application (Patent Application No. 2011-061965) filed on March 22, 2011, and the contents of which are incorporated herein by reference.

### Industrial Applicability

As described above, since the present invention has a configuration that the urging portion for urging the mobile device disposed in the case toward the charging coil is provided at the inner surface side of the lid, it is possible to prevent both charging coils from being deviated from a proper opposing state due to oscillation or impact occurred during running of a vehicle. As a result, it is possible to perform an efficient charging at all times even during running of a vehicle.

Further, since the urging portion is provided with a plurality of vent holes, it is possible to suppress the temperature rise due to the charging of the mobile device.

Accordingly, the present invention is expected to be utilized as the in-vehicle charger.

### Description of Reference Numerals and Signs

- 1: vehicle body
- 2: vehicle interior
- 3: steering wheel
- 4: in-vehicle electronic device
- 5,5A: in-vehicle charger
- 6: opening
- 7: case
- 8: lid
- 9,19: charging coil
- 10: mobile device
- 11: urging portion
- 11a: vent hole
- 12: frame
- 13: viewing window
- 13a: vent hole
- 14: power transmission unit
- 15: control unit
- 16: display unit
- 17: operation unit
- 18: storage unit
- 20: power reception unit
- 21: secondary battery
- 22: control unit
- 23: display unit
- 24: operation unit
- 25: storage unit
- 31: shield portion

## Claims

1. An in-vehicle charger comprising:
a case whose one face having an opening;
a lid that covers the opening of the case in an openable and closable manner;
a charging coil that is provided in an inner portion of the case facing the lid; and
an urging portion that is provided on an inner surface side of the lid and urges a mobile device disposed in the case toward the charging coil.

2. The in-vehicle charger according to claim 1, wherein the urging portion is provided with a plurality of vent holes.

3. The in-vehicle charger according to claim 1 or 2, wherein the urging portion is formed by an elastic net.

4. The in-vehicle charger according to any one of claims 1 to 3, wherein a viewing window is provided at a portion of the lid facing the charging coil.

5. The in-vehicle charger according to claim 4, wherein vent holes are provided at an outer peripheral portion of the viewing window of the lid.

6. The in-vehicle charger according to any one of claims 1 to 5, wherein a plurality of the charging coils are disposed in the inner portion of the case.
